# EUROPEAN PATENT APPLICATION

(11) **EP 2 056 188 A2**
(43) Date of publication of application: **06.05.2009**
(21) Application number: 08165386.7
(22) Date of filing: 29.09.2008
(51) Int. Cl.: G06F 3/045, G06F 3/041

(54) **Touch display device and method of determining touch mode thereof**

(30) Priority: 30.10.2007 TW 96140769
(71) Applicant: ASUSTeK Computer Inc., Peitou, Taipei 112 (TW)
(72) Inventor: Liu, Kuan-Lin, 112, Taipei City (TW); Hsieh, Ming-Chih, 112, Taipei City (TW); Lin, Chu-Hui, 112, Taipei City (TW)
(74) Representative: Viering, Jentschura & Partner

(57) **Abstract**

The present invention relates to a touch display device and a method of determining touch mode thereof. The touch display device comprises a control module, a resistance touch panel, and a measuring element. The resistance touch panel comprises a first conductive layer and a second conductive layer. The method comprises : pressing the first conductive layer to contact the second conductive layer; measuring the voltage of the second conductive layer to obtain a first voltage value and a second voltage value; activating a touch pen operation mode if a difference between the first voltage value and the second voltage value is smaller than a predicted error value; and activating a finger operation mode if the difference between the first voltage value and the second voltage value is larger than the predicted error value.

## Description

### BACKGROUND OF THE INVENTION

### 1. Field of the Invention

The present invention relates to a touch display device, and more particularly, relates to a touch display device capable of determining a touch pen operation mode or a finger operation mode.

### 2. Description of the Related Art

As the related technique keeps improving, there are more and more types of touch display devices, such as PDAs, mobile phones, and tablet PCs. Because a user can easily control the touch display device to input and select functions, the touch display devices become more popular in the related fields. The touch display device comprising a resistance touch panel is cheaper and easy to use; therefore, the resistance touch panels are widely used.

In the prior art, the touch display device having the resistance touch panel does not have a control module for determining a touch pen operation mode or a finger operation mode. The touch display device of the prior art has the same control effect between the touch pen operation mode and the finger operation mode. However, if a touch display device can identify different operation modes, the control methods and effects for the touch display device would be more varied.

Therefore, a new touch display device is required to solve problems of the prior art.

### SUMMARY OF THE INVENTION

It is therefore an object of the present invention to provide a touch display device capable of being operated under a touch pen operation mode or a finger operation mode.

It is another object of the present invention to provide a method of determining touch mode for a touch display device.

To achieve the object mentioned above, the touch display device of the present invention comprises a resistance touch panel, and a control module. The resistance touch panel comprises a first conductive layer and a second conductive layer. The first conductive has a uniform electric field. The second conductive layer comprises a first measuring electrode and a second measuring electrode. The first conductive layer is capable of contacting the second conductive layer by pressing with an input object. The control module is electrically connected to the first measuring electrode and the second measuring electrode. The control module comprises a measuring element for measuring the voltage of the first measuring electrode and the second measuring electrode. Wherein when the first conductive layer contacts the second conductive layer, the measuring element obtains a first voltage value and a second voltage value by measuring voltage of the first measuring electrode and the second measuring electrode respectively. A touch pen operation mode is activated if a difference between the first voltage value and the second voltage value is smaller than a predicted error value. And a finger operation mode is activated if the difference between the first voltage value and the second voltage value is smaller than the predicted error value

The determining method of the present invention is suitable for the above touch display device. Either the first conductive layer or the second conductive layer has a uniform electric field. The method comprises: pressing the first conductive layer by an input object to contact the second conductive layer; measuring the voltage of the first measuring electrode and the second measuring electrode to obtain a first voltage value and a second voltage value respectively; determining whether a difference between the first voltage value and the second voltage value is smaller than a predicted error value; activating the touch pen operation mode if the difference between the first voltage value and the second voltage value is smaller than the predicted error value; and activating the finger operation mode if the difference between the first voltage value and the second voltage value is larger than the predicted error value.

Other objects, advantages, and novel features of the present invention will become more apparent from the following detailed description when taken in conjunction with the accompanying drawings.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
Fig. 1A is a frame diagram of a touch display device according to the present invention;
Fig. 1B is a frame diagram of another touch display device according to the present invention;
Fig. 2 is a flow chart of a determining method according to the present invention;
Fig. 3A and Fig. 3B are equivalent circuit diagrams of a touch pen operation mode according to the present invention;
Fig. 4A and Fig. 4B are equivalent circuit diagrams of a finger operation mode according to the present invention;
Fig. 5A is an equivalent circuit diagram of a 5-wire resistance touch panel in the touch pen operation mode;
Fig. 5B is an equivalent circuit diagram of the 5-wire resistance touch panel in the finger operation mode; and
Fig. 6 is an illustration of an electronic device comprising the touch display device according to the present invention.

### DETAILED DESCRIPTION OF THE PREFERRED EMBODIMENT

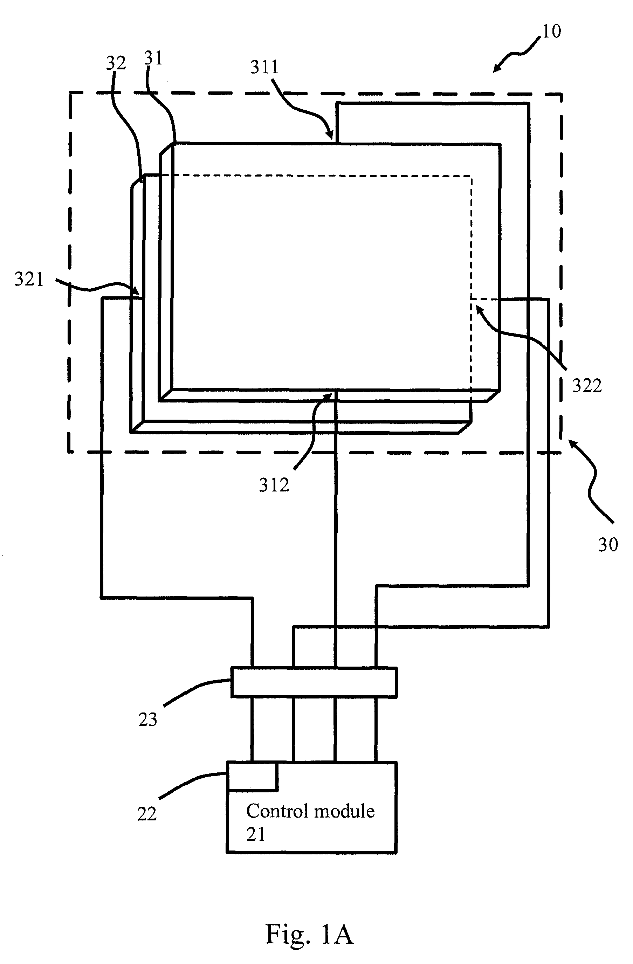

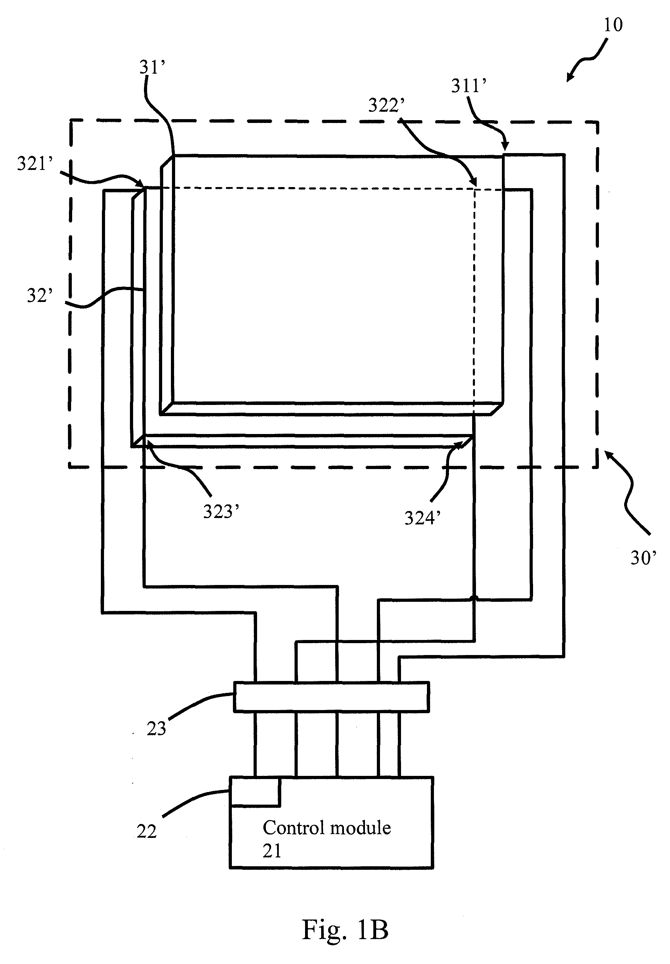

Please refer to Fig. 1A and Fig. 1B. Fig. 1A and Fig. 1B are frame diagrams of a touch display device according to the present invention.

The touch display device 10 of the present invention can be operated under a touch pen operation mode or a finger operation mode. As shown in Fig. 1A, the touch display device 10 comprises a control module 21, a switch circuit 23, and a resistance touch panel 30. The control module 21 comprises a measuring element 22 for measuring the voltage of each electrode of the resistance touch panel 30. The control module 21 is electrically connected to the switch circuit 23. The switch circuit 23 is capable of switching connections. The control module 21 can control the switch circuit 23 to switch connections between the measuring element 22 and each electrode of the resistance touch panel 30. In other embodiments of the present invention, the switch circuit 23 can also be installed inside the control module 21 or at other places.

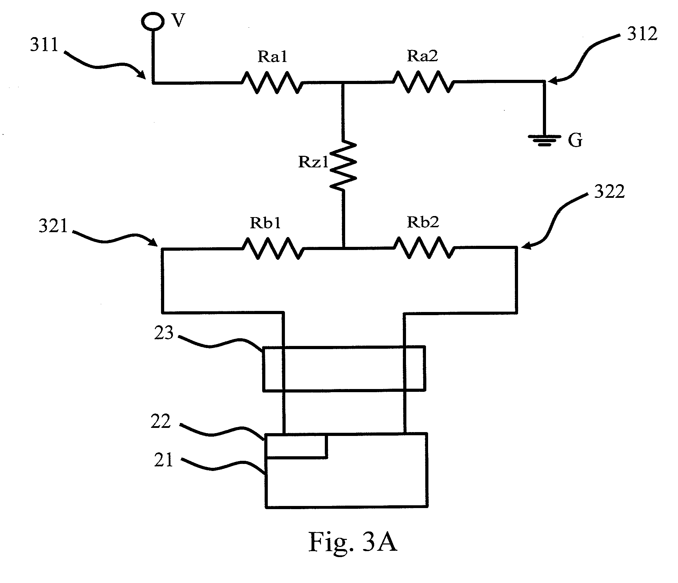

As shown in Fig. 1A, the resistance touch panel 30 is a 4-wire resistance touch panel. The resistance touch panel 30 comprises a first conductive layer 31 and a second conductive layer 32. The first conductive layer 31 comprises a first electrode 311 and a second electrode 312. The first electrode 311 and the second electrode 312 have a different voltage in order to form a uniform electric field. The first electrode 311 and the second electrode 312 electrically connected to a power source V and a ground G (as shown in Fig. 3A to Fig 4B.) respectively. The second conductive layer 32 comprises a first measuring electrode 321 and a second measuring electrode 322. The control module 21 is electrically connected to the first measuring electrode 321 and the second measuring electrode 322. In the present embodiment, the first electrode 311, the second electrode 312, the first measuring electrode 321, and the second measuring electrode 322 are wires. Therefore the resistance touch panel 30 is a 4-wire resistance touch panel. The first measuring electrode 321 and the second measuring electrode 322 are installed at opposite sides of the second conductive layer 32 for measuring an X-axis coordinate value of a touch point on the resistance touch panel 30. In order to measure a Y-axis coordinate value of a touch point on the resistance touch panel 30, the first measuring electrode 321 and the second measuring electrode 322 can also have a different voltage and form a uniform electric field. Therefore, the first electrode 311 and the second electrode 312 are utilized as measuring electrodes for measuring a Y-axis coordinate value of a touch point on the resistance touch panel 30. The working theory of the 4-wire resistance touch panel is well known by those in the related filed, therefore, it is not described further.

An input object (not shown) such as a touch pen or a finger can press the first conductive layer 31 to contact the second conductive layer 32, and it will cause short circuit between the first conductive layer 31 and the second conductive layer 32 to make the voltage drop. The measuring element 22 can measure the voltage of the first measuring electrode 321 or the second measuring electrode 322 to determine whether the first conductive layer 31 contacts the second conductive layer 32. When the input object press the first conductive layer 31 to contact the second conductive layer 32, the measuring element can measure the voltage of the first measuring electrode 321 and the second measuring electrode 322 to obtain a first voltage value and a second voltage value respectively. If a difference between the first voltage value and the second voltage value is larger than a predicted error value, it means a finger is touching the resistance touch panel 30, therefore, a finger operation mode is activated. If the difference between the first voltage value and the second voltage value is smaller than the predicted error value, it means a touch pen is touching the resistance touch panel 30. Therefore, a touch pen operation mode is activated. The detail of the determining method will be described later.

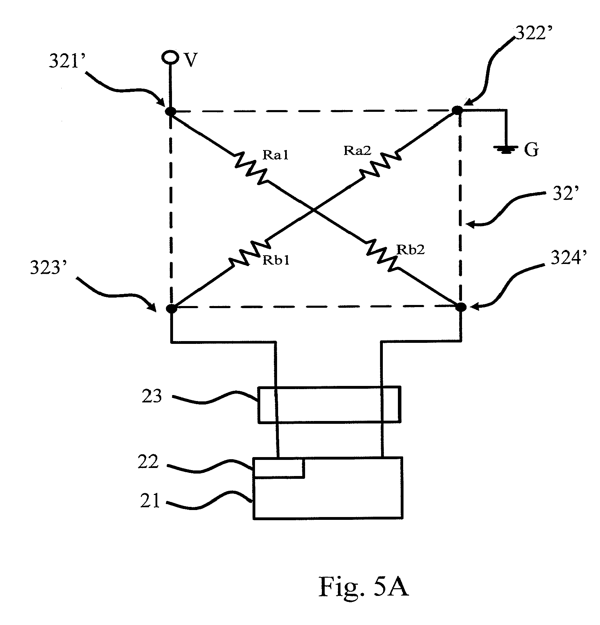

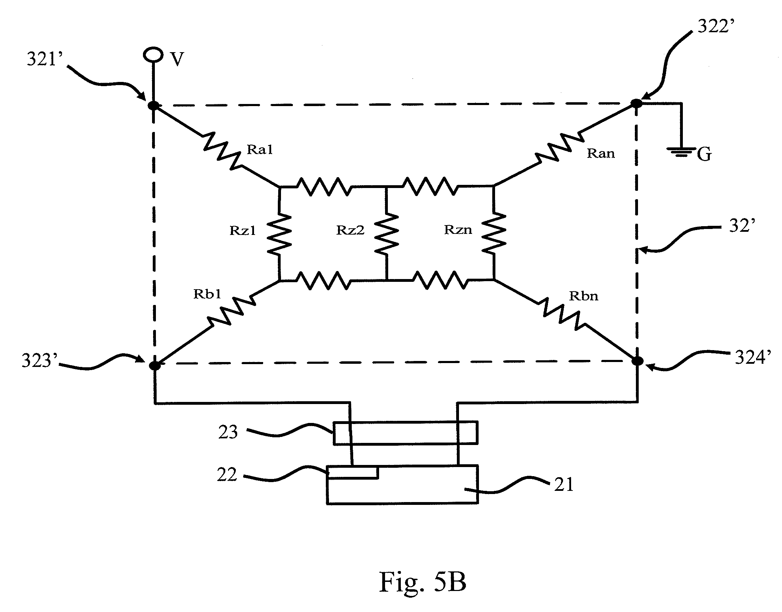

As shown in Fig. 1B, in an embodiment according to the present invention, the resistance touch panel 30' also can be a 5-wire resistance touch panel. The resistance touch panel 30' comprises a first conductive layer 31' and a second conductive layer 32'. The first conductive layer 31' comprises a sensing electrode 311'. The second conductive layer 32' comprises a first electrode 321', a second electrode 322', a first measuring electrode 323', and a second measuring electrode 324'. The first electrode 321' and second electrode 322' are electrically connected to a power source V and a ground G (as shown in Fig. 5A and Fig. 5B) respectively in order to have a different voltage between the first electrode 321' and the second electrode 322' and form a uniform electric field. In the present embodiment, the sensing electrode 311', the first electrode 321', the second electrode 322', the first measuring electrode 323', and the second measuring electrode 324' are wires. Therefore, the resistance touch panel 30 is a 5-wire resistance touch panel. Wherein, the first electrode 321', the second electrode 322', the first measuring electrode 323', and the second measuring electrode 324' can be utilized for measuring X-axis and Y-axis coordinate values of a touch point on the resistance touch panel 30. The working theory of the 5-wire resistance touch panel is well known by those in the related filed, therefore, it is not described further.

An input object (not shown) such as a touch pen or a finger can press the first conductive layer 31' to contact the second conductive layer 32', and it will cause short circuit between the first conductive layer 31' and the second conductive layer 32' to make the voltage drop. The measuring element 22 can measure the voltage of the sensing electrode 311' to determine whether the first conductive layer 31' contacts the second conductive layer 32'. When the first conductive layer 31' contacts the second conductive layer 32', the measuring element 22 can measure the voltage of the first measuring electrode 323' and the second measuring electrode 324' to obtain a first voltage value and a second voltage value respectively. If a difference between the first voltage value and the second voltage value is larger than a predicted error value, it means a finger is touching the resistance touch panel 30', therefore, a finger operation mode is activated. If the difference between the first voltage value and the second voltage value is smaller than the predicted error value, it means a touch pen is touching the resistance touch panel 30', therefore, a touch pen operation mode is activated. The detail of the determining method will be described later.

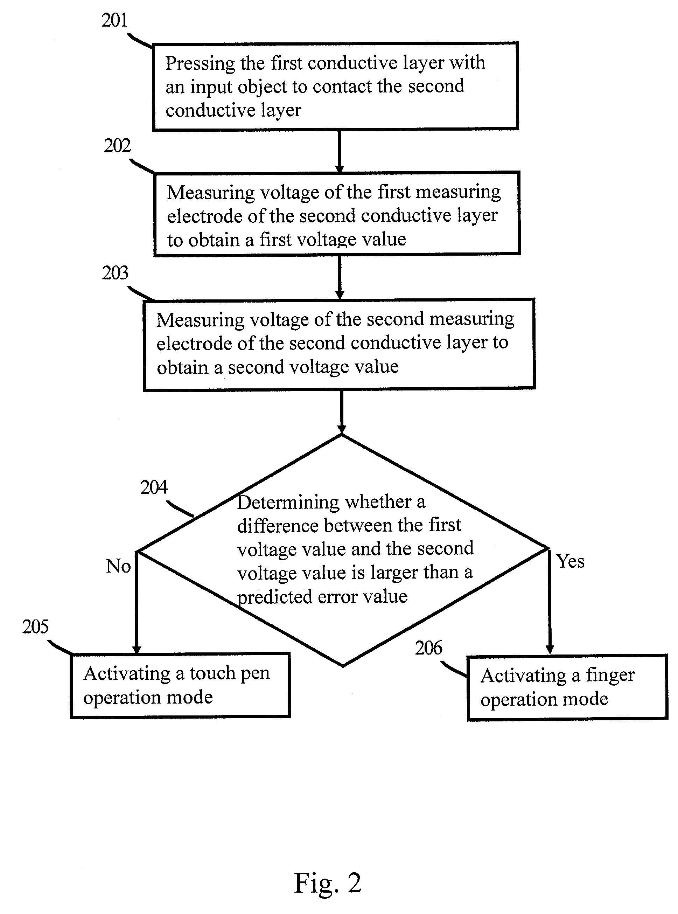

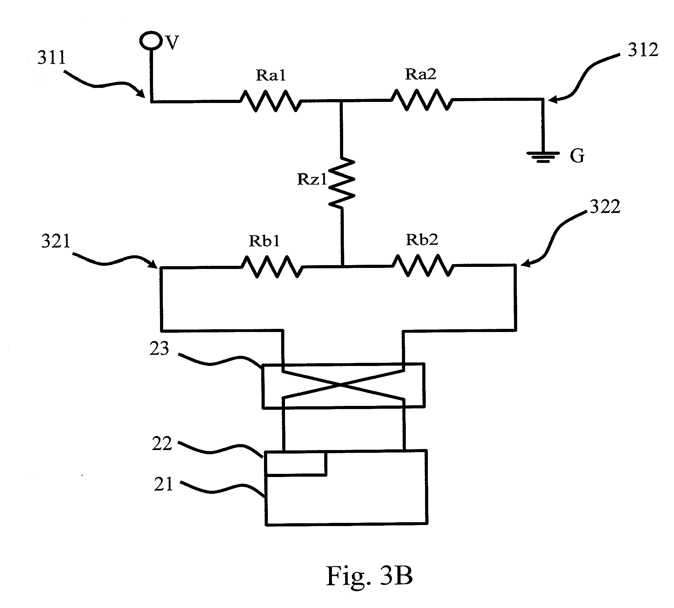

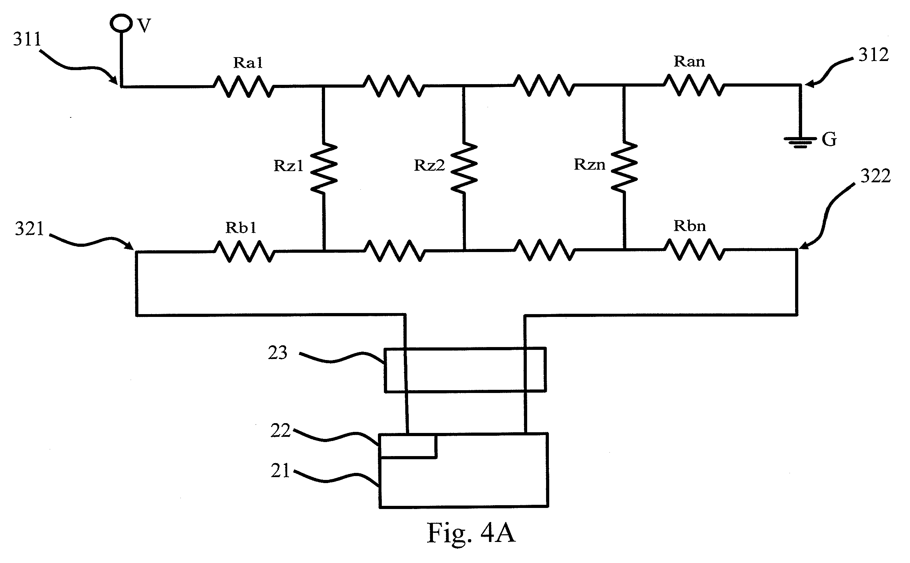

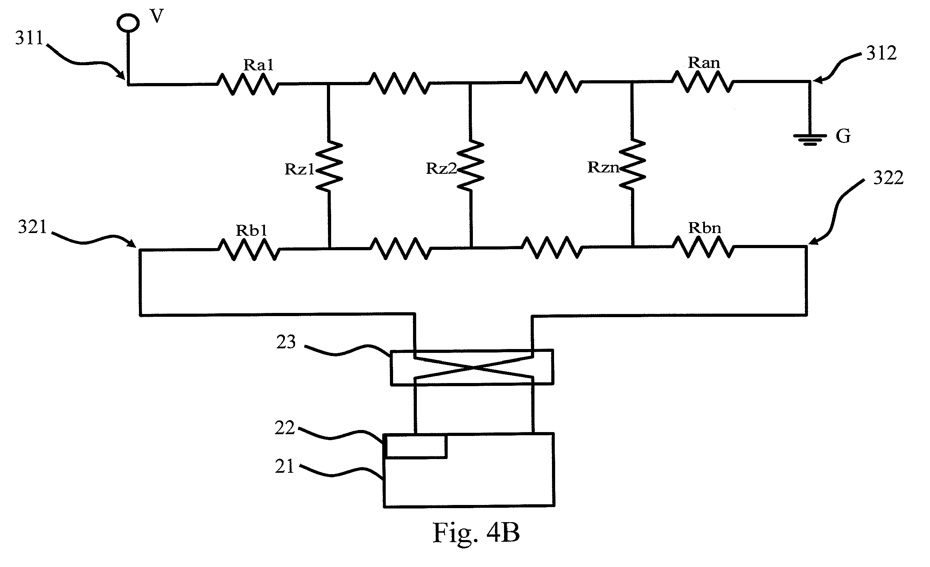

Please refer to Fig. 2 to Fig. 4B. Fig. 2 is a flow chart of the determining method according to the present invention. Fig. 3A and Fig. 3B are equivalent circuit diagrams of a touch pen operation mode according to the present invention. Fig. 4A and Fig. 4B are equivalent circuit diagrams of a finger operation mode according to the present invention. The following example is a 4-wire resistance touch panel, but the method of the present invention is not limited by it.

In step 201: pressing the first conductive layer with an input object to contact the second conductive layer.

In order to determine whether the first conductive layer 31 contacts the second conductive layer 32, the control module 21 controls one pair of the electrodes of the resistance touch panel 30 to connect the power source V and ground G respectively, and then measures the voltage of the other pair of the electrodes to sense any voltage drop. As shown in Fig. 3A and Fig. 3B, when the first conductive layer 31 contacts the second conductive layer 32, the first conductive layer 31 and the second conductive layer 32 form a plurality of equivalent resistors Ra1, Ra2, Rb1, and Rb2 respectively. And the contact area between the first conductive layer 31 and the second conductive layer 32 also forms an equivalent resistor Rz1. At this moment, the control module 21 controls the first electrodes 311 to connect the power source V and second electrodes 312 to connect the ground G respectively, and then utilizes the measuring element 22 to measure the voltage of the first measuring electrode 321. If the first conductive layer does not contact the second conductive layer 32, the equivalent circuit is broken, and there is no voltage drop on the first measuring electrode 32. On the other hand, if the first conductive layer 31 contacts the second conductive layer 32, there is a voltage drop on the first measuring electrode 321. The control module 21 can determine whether the first conductive layer 31 contacts the second conductive layer 32 by the above method.

The above method is just one of the examples of the present invention. The present invention also can connect the first electrodes 321 to the power source V and connect second measuring 322 to the ground G respectively, and then measures the voltage of the first electrode 311 to determine whether the first conductive layer 31 contacts the second conductive layer 32.

When the first conductive layer 31 contacts the second conductive layer 32, the method of the present invention goes to step 202: measuring the voltage of the first measuring electrode of the second conductive layer to obtain a first voltage value.

As shown in Fig. 3A and Fig. 4A, the control module 21 can utilize the measuring element 22 to measure the voltage of the first measuring electrode 321 for obtaining a first voltage value.

In step 203: measuring the voltage of the second measuring electrode of the second conductive layer to obtain a second voltage value.

As shown in Fig. 3B and Fig. 4B, the control module 21 can control the switch circuit 23 to switch the measuring element 22 to measure the voltage of the second measuring electrode 322 for obtaining a second voltage value.

In step 204: determining whether a difference between the first voltage value and the second voltage value is larger than a predicted error value.

The control module 21 can determine whether the difference between the first voltage value and the second voltage value is larger than a predicted error value. Wherein, the predicted error value can be set in advance by the control module 21.

If the voltage difference is smaller than the predicted error value, the method of the present invention goes to step 205: activating a touch pen operation mode.

When a touch pen touches the resistance touch panel 30, the contact area between the first conductive layer 31 and the second conductive layer 32 is small, and its equivalent circuit is shown in Fig. 3A and Fig. 3B. There is only one equivalent resistor Rz1 at the contact area. The first voltage value of the first measuring electrode 321 will be close or almost equal to the second voltage value of the second measuring electrode 322. Therefore, when the difference between the first voltage value and the second voltage value is smaller than the predicted error value, it means a touch pen or similar object is touching the resistance touch panel 30. The control module 21 will then activate the touch pen operation mode.

If the voltage difference is larger than the predicted error value, the method of the present invention goes to step 206: activating a finger operation mode.

When a finger touches the resistance touch panel 30, the contact area between the first conductive layer 31 and the second conductive layer 32 is large, and its equivalent circuit is shown in Fig. 4A and Fig. 4B. Therefore, a plurality of equivalent resistors Ra1 to Ran are formed on the first conductive layer 31, a plurality of equivalent resistors Rb1 to Rbn are formed on the second conductive layer 32, and a plurality of equivalent resistors Rz1 to Rzn are formed at the contact area. Because there are lots of equivalent resistors formed between the first conductive layer 31 and the second conductive layer 32, the first voltage value of the first measuring electrode 321 will be different from the second voltage value of the second measuring electrode 322. Therefore, when the difference between the first voltage value and the second voltage value is larger than the predicted error value, it means a finger or similar object with larger contact area is touching the resistance touch panel 30. The control module 21 will then activate the finger operation mode.

More particularly, to achieve the same result, the steps of the method of the present invention need not be in the exact order shown and need not be contiguous, that is, other steps can be intermediate.

In addition, the method of the present invention can also be applied to a 5-wire resistance touch panel as shown in Fig. 1B. Please refer to Fig. 5A and Fig. 5B. Fig. 5A is an equivalent circuit diagram of the 5-wire resistance touch panel 30' in the touch pen operation mode. Fig. 5B is an equivalent circuit diagram of the 5-wire resistance touch panel 30' in the finger operation mode.

As shown in Fig. 5A and Fig. 5B, the first electrode 321' and the second electrode 322' are electrically connected to the power source V and ground G respectively. The measuring element 22 is electrically connected to the first measuring electrode 323' and the second measuring electrode 324' for measuring voltage. In Fig. 5A, when the first conductive layer 31' contacts the second conductive layer 32', and the contact area on the second conductive layer 32' is small, the difference between the first voltage value measured from the first measuring electrode 323' and the second voltage value measured from the second measuring electrode 324' will be located in a default range. Therefore, it can determine that a touch pen is touching the resistance touch panel 30'. In Fig. 5B, if the contact area on the second conductive layer 32' is large, the difference between the first voltage value measured from the first measuring electrode 323' and the second voltage value measured from the second measuring electrode 324' will be located outside the default range. Therefore, it can determine that a finger is touching the resistance touch panel 30'. Because the determining method of the 5-wire resistance touch panel 30' is similar to the above determining method of the 4-wire resistance touch panel 30, therefore, it is not described further.

According to the above method, the resistance touch panel 30' can determine the touch mode between the touch pen operation mode and the finger operation mode.

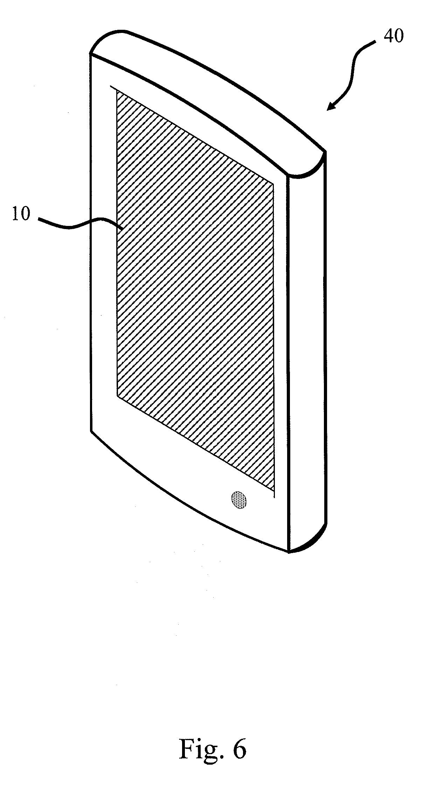

Please refer to Fig. 6. Fig. 6 is an illustration of an electronic device comprising the touch display device according to the present invention.

The touch display device 10 according to the present invention can be installed in an electronic device 40. The electronic device 40 can be a tablet PC, mobile phone, and PDA. When a user touches the touch display device 10 by a touch pen or a finger, the touch display device 10 can switch the touch mode to the touch pen operation mode or the finger operation for different purposes. For example, the touch pen operation mode can draw a thinner line, and the finger operation mode can draw a thicker line. The electronic device 40 can have more control choices for the user.

Although the present invention has been explained in relation to its preferred embodiments, it is to be understood that many other possible modifications and variations can be made without departing from the spirit and scope of the invention as hereinafter claimed.

## Claims

1. A touch display device capable of being operated under a touch pen operation mode or a finger operation mode comprising:
a resistance touch panel comprising:
a first conductive layer having a uniform electric field; and
a second conductive layer having a first measuring electrode and a second measuring electrode, the first conductive layer being capable of contacting the second conductive layer by pressing with an input object; and
a control module electrically connected to the first measuring electrode and the second measuring electrode, the control module comprising a measuring element for measuring the voltage of the first measuring electrode and the second measuring electrode ;
wherein when the first conductive layer contacting the second conductive layer, the measuring element obtains a first voltage value and a second voltage value by measuring the voltage of the first measuring electrode and the second measuring electrode respectively, and the touch pen operation mode is activated if a difference between the first voltage value and the second voltage value is smaller than a predicted error value.

2. The touch display device as claimed in claim 1 further comprising a switch circuit electrically connected to the control module, the control module is used to control the switch circuit for switching the measuring element to measure the voltage of the first measuring electrode or the second measuring electrode.

3. The touch display device as claimed in claim 1, wherein the control module further comprises a switch circuit for switching the measuring element to measure the voltage of the first measuring electrode or the second measuring electrode.

4. The touch display device as claimed in claim 1, wherein the first conductive layer further comprises a first electrode and a second electrode, the first electrode electrically connected to a power source, and the second electrode electrically connected to a ground in order to have a different voltage between the first electrode and the second electrode and form the uniform electric field.

5. The touch display device as claimed in claim 1, wherein an X-axis coordinate value is obtained by measuring the first measuring electrode and the second measuring electrode.

6. The touch display device as claimed in claim 1, wherein a Y-axis coordinate value is obtained by measuring the first measuring electrode and the second measuring electrode.

7. The touch display device as claimed in claim 1, wherein the finger operation mode is activated if the difference between the first voltage value and the second voltage value is larger than the predicted error value.

8. A touch display device capable of being operated under a touch pen operation mode or a finger operation mode comprising:
a resistance touch panel comprising:
a first conductive layer; and
a second conductive layer having a uniform electric field, a first measuring electrode, and a second measuring electrode, the first conductive layer being capable of contacting the second conductive layer by pressing with an input object; and
a control module electrically connected to the first measuring electrode and the second measuring electrode, the control module comprising a measuring element for measuring the voltage of the at the first measuring electrode and the second measuring electrode;
wherein when the first conductive layer contacting the second conductive layer, the measuring element obtains a first voltage value and a second voltage value by measuring the voltage of the first measuring electrode and the second measuring electrode respectively, and the touch pen operation mode is activated if a difference between the first voltage value and the second voltage value is smaller than a predicted error value.

9. The touch display device as claimed in claim 8 further comprising a switch circuit electrically connected to the control module, the control module is used to control the switch circuit for switching the measuring element to measure the voltage of the first measuring electrode or the second measuring electrode.

10. The touch display device as claimed in claim 8, wherein the control module further comprises a switch circuit for switching the measuring element to measure the voltage of the first measuring electrode or the second measuring electrode.

11. The touch display device as claimed in claim 8, wherein the second conductive layer further comprises a first electrode and a second electrode, the first electrode electrically connected to a power source, and the second electrode electrically connected to a ground in order to have a different voltage between the first electrode and the second electrode and form the uniform electric field.

12. The touch display device as claimed in claim 8, wherein an X-axis coordinate value is obtained by measuring the first measuring electrode and the second measuring electrode.

13. The touch display device as claimed in claim 8, wherein a Y-axis coordinate value is obtained by measuring the first measuring electrode and the second measuring electrode.

14. The touch display device as claimed in claim 8, wherein a finger operation mode is activated if the difference between the first voltage value and the second voltage value is larger than the predicted error value.

15. A method of determining a touch pen operation mode or a finger operation mode for a touch display device, the touch display device comprising a first conductive layer and a second conductive layer, either the first conductive layer or the second conductive layer having a uniform electric field, the second conductive layer comprising a first measuring electrode and a second measuring electrode, the first conductive layer being capable of contacting the second conductive layer by pressing with an input object, the method comprising:
pressing the first conductive layer with the input object to contact the second conductive layer;
measuring the voltage of the first measuring electrode and the second measuring electrode to obtain a first voltage value and a second voltage value respectively;
determining whether a difference between the first voltage value and the second voltage value is smaller than a predicted error value; and
activating the touch pen operation mode if the difference between the first voltage value and the second voltage value is smaller than the predicted error value, or activating the finger operation mode if the difference between the first voltage value and the second voltage value is larger than the predicted error value.

16. The method as claimed in claim 15, wherein the first conductive layer further comprises a first electrode and a second electrode, the first electrode electrically connected to a power source, and the second electrode electrically connected to a ground, wherein the first electrode and the second electrode have a different voltage in order to form the uniform electric field.

17. The method as claimed in claim 15, wherein the second conductive layer further comprises a first electrode and a second electrode, the first electrode electrically connected to a power source, and the second electrode electrically connected to a ground, wherein the first electrode and the second electrode have a different voltage in order to form the uniform electric field.
